# FASCICULE DE BREVET EUROPEEN

(11) **EP 2 080 658 B1**
(45) Date de publication et mention de la délivrance du brevet: **14.03.2012**
(21) Numéro de dépôt: 09150648.5
(22) Date de dépôt: 15.01.2009
(51) Int. Cl.: B60K 11/08, B60R 21/34

(54) **Support de volets d'obturation d'entrée d'air**
Halterung für Abdeckrollos gegen Lufteinlass
Air inlet shutter support

(30) Priorité: 16.01.2008 FR 0850270
(43) Date de publication de la demande: 22.07.2009
(73) Titulaire: COMPAGNIE PLASTIC OMNIUM, 69007 Lyon (FR)
(72) Inventeur: Gilotte, Philippe, 01470 BENONCES (FR); Roussel, Thierry, 52500 MONTESSON (FR)
(74) Mandataire: Remy, Vincent Noel Paul

(56) Documents cités:
- EP-A- 1 314 614
- EP-A- 1 813 485
- WO-A-03/024747
- DE-A1- 3 151 435
- FR-A- 2 804 638

## Description

La présente invention concerne un avant de véhicule automobile comprenant un pare-chocs.

L'une des préoccupations actuelles en matière de véhicule automobile est la gestion des chocs du pare-chocs avant du véhicule avec un piéton pour limiter les blessures occasionnées par ce choc.

Le pare-chocs avant comprend tous les éléments situés à l'avant du véhicule destinés à protéger celui-ci en cas de collision frontale avec un autre véhicule ou avec un piéton. Ainsi, le pare-chocs peut comprendre notamment une peau, une poutre de choc, des absorbeurs d'énergie ou des éléments destinés à traiter spécifiquement le cas d'un choc avec un piéton tels qu'un appui bas destiné à entrer en contact avec le tibia d'un piéton.

Pour évaluer la capacité d'un pare-chocs à protéger un piéton en cas de choc, différents critères sont utilisés. Certains de ces critères ont parfois donné lieu à des normes à respecter.

A titre d'exemple, on peut citer la Directive 2005/66/CE du Parlement européen et du Conseil du 26 octobre 2005 relative à l'utilisation de systèmes de protection frontale sur les véhicules à moteur et modifiant la Directive 70/156/CEE du Conseil ainsi que la décision de la Commission du 20 mars 2006 concernant les prescriptions techniques détaillées pour la réalisation des essais prévus dans la Directive 2005/66/CE du Parlement européen et du Conseil relative à l'utilisation de systèmes de protection frontale sur les véhicules à moteur. En particulier, dans ces documents dont le contenu est incorporé par référence, on s'intéresse à la forme et la masse de jambe et de la tête utilisées pour réaliser les essais ainsi qu'aux caractéristiques du chocs, notamment à l'angle, la position, la vitesse du choc.

Ces deux documents définissent des critères que doit remplir un véhicule automobile en cas de choc contre le bas de la jambe, le haut de la jambe, la hanche, et la tête d'un piéton, notamment d'un enfant.

Des critères différents peuvent bien entendu être utilisés dans d'autres pays du monde.

En tout état de cause, l'architecture et la structure avant d'un véhicule automobile doivent être spécifiquement conçues pour répondre à ces critères. Actuellement, les constructeurs automobiles proposent de répondre à ces critères en configurant convenablement les pare-chocs, notamment les poutres de choc, les absorbeurs ou les appuis bas.

EP 1 813 485 décrit un

Dispositif destiné à être monté à l'avant d'un véhicule automobile entre un radiateur et une peau de pare-chocs munie d'une entrée d'air, comprend :
- des moyens de fixation d'au moins un volet d'obturation de l'entrée d'air,
- une surface formant portée d'appui contre une poutre de chocs, conformée pour prendre appui contre une surface supérieure de la poutre et ainsi former un appui rigide en cas de choc,
- une surface formant portée d'appui contre la poutre, conformée pour prendre appui contre une surface frontale de la poutre et ainsi former un appui rigide en cas de choc,
- au moins une portée d'appui contre la peau,
le dispositif étant agencé pour que, lors d'un choc contre le pare-chocs :
- le dispositif absorbe une partie significative de l'énergie du choc en se déformant et/ou en se cassant,
- les surfaces formant portées d'appui contre la poutre de chocs permettant au dispositif de reprendre la composante verticale et la composante horizontale d'un choc,
l'entrée d'air étant une entrée d'air supérieure, située au dessus de la poutre de chocs.

L'invention a notamment pour but de proposer une nouvelle architecture de l'avant d'un véhicule automobile permettant d'améliorer la protection d'un piéton en cas de choc avec le véhicule.

A cet effet, l'invention a pour objet un dispositif selon la revendication 1.

Par agencement du dispositif, on entend à la fois sa forme, sa structure, les matériaux qui le composent et encore la manière dont il est fixé à la pièce de structure du véhicule ou à la peau. Par portée d'appui, on entend aussi bien une surface qu'une ligne d'appui.

Un dispositif d'obturation d'entrée d'air est connu du document DE-A1-103 06 158. Ce dispositif, parfois appelé jalousie, comprend un cadre placé derrière une entrée d'air, le cadre comprenant des volets mobiles d'obturation. Toutefois, ce cadre ne fait pas partie du pare-chocs du véhicule automobile et ne participe pas à la protection d'un piéton lors d'un choc.

L'invention propose d'intégrer dans le pare-chocs un dispositif d'obturation d'entrée d'air, c'est-à-dire de lui donner, outre son rôle premier d'obturation, un second rôle de traitement des chocs. A cet effet, l'invention propose d'utiliser la rigidité et la capacité de déformation du dispositif d'obturation pour qu'il participe au traitement des chocs avec un piéton. Pour cela, le dispositif de l'invention est conformé et agencé de manière à s'appuyer à la fois contre la peau (qui reçoit l'impact du piéton) et contre la structure du véhicule (qui supporte les efforts) de manière à absorber au moins une partie significative de l'énergie exercée sur la peau au lieu de la transmettre intégralement à la structure du véhicule automobile. Par partie significative de l'énergie du choc, on entend une quantité d'énergie suffisante pour que la quantité restante d'énergie non absorbée par le dispositif et donc reprise par la structure soit inférieure au seuil d'énergie susceptible de blesser le piéton à la hanche, à la tête ou au genou.

Grâce au contact direct du dispositif contre la peau, la reprise d'effort par le dispositif en cas de choc est très rapide. En effet, il n'existe aucun débattement susceptible de différer la reprise d'efforts. Il en est de même en ce qui concerne l'interface entre le dispositif et la structure du véhicule.

Par structure du véhicule, on entend tout élément rigide destiné à apporter la robustesse au véhicule automobile en fonctionnement normal et à résister aux efforts subis lors d'un choc avec un piéton. Un exemple de choc piéton est celui décrit dans la norme précitée dans laquelle un impacteur en forme de jambe d'un poids prédéfini heurte le pare-chocs à une vitesse de 40km/h. Les éléments rigides dans un tel cas sont ceux qui ne sont pas structurellement altérés par le choc. Il est alors évident que la notion de rigidité dépend du choc considéré car des éléments capables de résister à un choc piéton sont susceptibles d'être endommagés par un choc à plus haute énergie, par exemple contre un autre véhicule. En particulier, une poutre de choc, des longerons ou une traverse supérieure d'une face avant technique du véhicule sont des pièces de structure.

Le dispositif est en outre agencé pour absorber et transmettre plus ou moins les efforts à la structure en fonction de la localisation du choc sur la peau et donc de la partie du dispositif qui reprend les efforts par l'intermédiaire de la portée d'appui contre la peau. En effet, étant donné que le dispositif de l'invention s'étend au moins depuis la partie supérieure de l'entrée d'air jusque sa partie inférieure, il est apte à participer au traitement des chocs avec différentes parties du corps d'un piéton.

Tout d'abord, la partie inférieure du dispositif de l'invention, située sensiblement au niveau du bas de l'entrée d'air, est apte à reprendre des efforts en cas de choc de la jambe d'un piéton, notamment de son genou. Pour ne pas blesser le piéton il est recommandé d'amortir un tel choc.

Ensuite, la partie intermédiaire ou centrale du dispositif, située sensiblement au niveau de l'entrée d'air, est apte à reprendre des efforts en cas de choc avec la hanche d'un piéton. Dans le cas du chocs hanche, il est recommandé de reprendre rigidement ces efforts.

Le dispositif selon l'invention comprend à la fois une surface conformée pour prendre appui contre une surface supérieure de la poutre et une surface conformée pour prendre appui contre une surface frontale de la poutre. L'ensemble de ces deux surfaces forme un siège permettant d'optimiser le traitement du choc avec la hanche d'un piéton. On rappelle que, selon la norme européenne, le choc d'une hanche d'un piéton contre un pare-chocs de véhicule automobile est modélisé par un choc selon une direction faisant un angle de l'ordre de 30° avec un plan vertical. Ainsi, ce choc hanche comprend à la fois une composante horizontale et une composante verticale. Le dispositif de l'invention permet de reprendre convenablement les deux composantes du choc hanche.

Enfin, la partie supérieure du dispositif, située sensiblement au niveau du haut de l'entrée d'air est apte à reprendre des efforts en cas de choc avec la tête d'un piéton, notamment d'un enfant. Pour ne pas blesser le piéton, il est recommandé d'amortir un tel choc.

Pour tenir compte de l'un ou plusieurs de ces trois types de chocs, la forme et la rigidité des différentes zones du dispositif, et/ou ses moyens de fixation avec la structure du véhicule, sont conçus spécifiquement.

Un dispositif selon l'invention peut en outre comprendre l'une ou plusieurs des caractéristiques suivantes.
- La portée d'appui contre la peau épouse sensiblement le contour de l'entrée d'air. Le contour de l'entrée d'air forme une bordure souple de la peau de pare-chocs. Le dispositif de l'invention soutient la peau de pare-chocs aux endroits souples et permet ainsi de réduire ses déformations. En d'autres termes, le dispositif de l'invention permet de mettre en forme la peau et de réduire le cloquage de la peau ce qui améliore la qualité perçue. Il agit donc comme un renfort. En outre, en épousant sensiblement la forme de la peau tout autour de l'entrée d'air, le dispositif soutient la peau sur une grande surface, ce qui améliore les qualités de reprise d'effort du dispositif en cas de choc d'un piéton contre le pare-chocs.
- Le dispositif comprend un cadre auquel est fixé le volet. De préférence, ce cadre s'étend dans un plan sensiblement vertical et porte une pluralité de volets agencés pour obturer totalement l'entrée d'air.

De préférence, la surface formant portée d'appui est située juste en dessous des volets d'obturation. Ainsi, en cas de choc vertical d'un piéton contre le pare-chocs du véhicule automobile, la surface formant portée d'appui contre la poutre vient en appui contre la surface supérieure de la poutre. Cet appui est rigide, ce qui est recommandé par les normes relatives au traitement du choc avec la hanche d'un piéton.

De préférence, la surface formant portée d'appui est située juste en dessous des volets d'obturation. Dans ce cas également, l'appui est rigide, ce qui est recommandé par les normes relatives au traitement du choc d'un piéton, notamment lors du choc de la hanche du piéton.
- Le dispositif comprend des moyens d'entretoisement horizontal de la peau et d'une poutre de choc, les moyens d'entretoisement étant en appui respectivement contre la peau et contre la poutre. De préférence, ces moyens d'entretoisement sont situés en partie inférieure du dispositif et sont en appui contre une zone de la peau située en dessous de l'entrée d'air, en regard de la poutre de chocs, à une hauteur correspondant sensiblement au genou d'un piéton. Grâce à ces moyens d'entretoisement, lors d'un choc d'un piéton avec le véhicule automobile, le genou du piéton ne risque pas d'entrer en contact avec la poutre de chocs sans amortissement préalable ce qui le blesserait fortement.
- Les moyens d'entretoisement sont conformés pour se déformer ou céder en cas de choc sensiblement horizontal et forment ainsi des moyens d'absorption d'énergie, notamment en cas de choc avec la jambe d'un piéton, notamment avec son genou. Grâce à cette caractéristique, cela permet de réduire les blessures occasionnées sur la jambe du piéton en cas de choc. En particulier, dans le cas où les moyens d'entretoisement sont réalisés en un matériau rigide et cassant, on peut prévoir des amorces de rupture ou des diminutions locales d'épaisseur de ces moyens de manière à ce qu'ils cèdent en cas de choc, au delà d'un certain effort. On peut également prévoir de concevoir ces moyens d'entretoisement en un matériau relativement souple apte à se déformer et à absorber l'énergie du choc. Dans ce second cas, les moyens d'entretoisement peuvent être rapportés sur le cadre du dispositif, par exemple par surmoulage. A titre d'exemple, on peut utiliser un ensemble de nervures d'entretoisement en appui d'un coté contre la poutre de choc et de l'autre contre la peau, ces nervures étant destinées à flamber en cas de choc. On peut également utiliser d'autres moyens d'absorption d'énergie tel qu'un absorbeur en nid d'abeille.
- Les moyens de liaison sont conformés pour céder en cas de choc sensiblement vertical, notamment en cas de choc avec la tête d'un enfant. En d'autre termes, ces moyens de liaison, qui peuvent également être qualifié de moyens de reprise d'efforts, sont effaçable, c'est-à-dire apte à céder pour ne reprendre plus aucun effort. Le dispositif de l'invention est conformé de manière à ce que, en cas de choc de la tête d'un enfant sur le véhicule automobile, la tête heurte préférentiellement le haut du dispositif et non la traverse supérieure. Dans ce cas, sous l'effet du choc, les moyens de liaison sont aptes à céder de manière à libérer verticalement le dispositif et ainsi à amortir le choc de la tête du piéton pour ne pas le blesser.
- Les moyens de liaison comprennent une extrémité liée au dispositif et une extrémité libre destinée à être fixée rigidement à la traverse supérieure, notamment à une surface supérieure de la traverse, les moyens de liaison comprenant au moins une zone de fragilité destinée à céder en cas de choc. Ces moyens de liaison peuvent comprendre une ou plusieurs pattes de fixation.
- Le dispositif comprend des moyens de fixation à la peau, par exemple des moyens de vissage, d'encliquetage, de soudage notamment par bouterollage.
- L'entrée d'air est une entrée d'air supérieure, c'est-à-dire située au dessus de la poutre de chocs.
- Les surfaces d'appui contre la poutre de chocs sont situées en zone inférieure du dispositif, c'est-à-dire en dessous des moyens de fixation du volet mobile d'obturation de l'entrée d'air.

L'invention a également pour objet un ensemble d'une peau de pare-chocs et d'un dispositif selon l'invention

L'invention sera mieux comprise à la lecture de la description qui va suivre, donnée uniquement à titre d'exemple et faite en se référant aux dessins annexés dans lesquels :
- la figure 1 est une vue en perspective d'un dispositif selon l'invention,
- les figures 2 et 3 sont des sections verticale longitudinale du dispositif de la figure 1.

Dans la description qui suit, on définit un repère XYZ lié à un véhicule automobile dans lequel la direction X correspond à la direction longitudinale du véhicule orientée vers l'avant, la direction Y correspond à sa direction transversale et la direction Z correspond à la direction verticale orientée vers le haut.

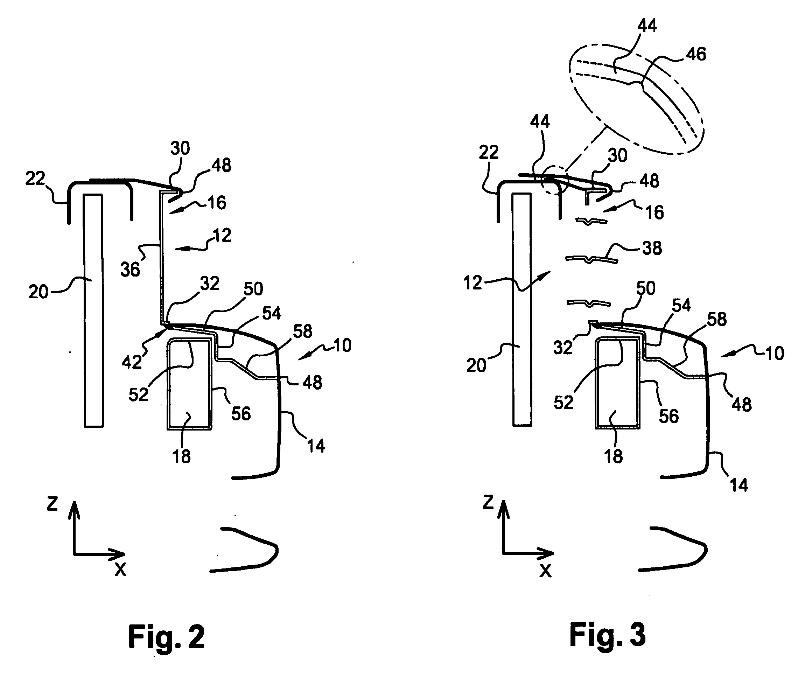

On a représenté sur la figure 2 et 3 un pare-chocs avant 10 de véhicule automobile, selon invention en deux sections différentes. La figure 2 est une section en Y=0, c'est-à-dire dans un plan longitudinal médian du véhicule, et la figure 3 est une section en Y=100, c'est-à-dire dans un plan longitudinal situé à 10 centimètres du plan médian.

Le pare-chocs 10 comprend un dispositif 12 selon l'invention, une peau 14 munie d'une entrée d'air 16 et une poutre de chocs 18.

Le dispositif 12 est monté à l'avant du véhicule automobile entre la peau 14 et un radiateur 20. Le dispositif 12 et placé en regard de l'entrée d'air 16 du pare-chocs de manière à guider le flux d'air vers le radiateur 20. Le radiateur 20 fait partie d'une face avant technique comprenant une traverse supérieure 22 destinée notamment à reprendre les efforts d'un capot du véhicule. La traverse 22 est une pièce de structure du véhicule.

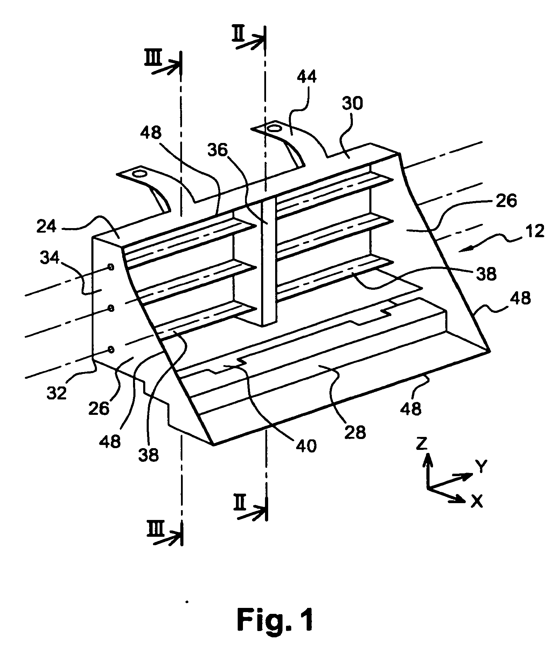

Le dispositif 12, représenté seul sur la figure 1, comprend un cadre 24 appartenant à un plan sensiblement vertical, deux parois latérales 26 de guidage d'air sensiblement normales au plan du cadre 24 et une paroi inférieure 28 de guidage d'air située en saillie du cadre 24.

Le cadre 24 comprend un montant horizontal supérieur 30, un montant horizontal inférieur 32, deux montants verticaux latéraux 34 et un montant vertical central 36. Les montants verticaux 34 et 36 comprennent des moyens de fixation de volets mobiles 38 d'obturation qui, dans l'exemple représenté sont des paliers destinés à accueillir des axes des volets. Les volets mobiles 38 sont aptes à adopter une première configuration ouverte représentée sur la figure 1 dans laquelle le cadre peut être traversé par un flux d'air et une seconde configuration (non-représentée) dans laquelle les volets obturent le cadre 24 et empêchent un flux d'air de le traverser.

Le dispositif 12 et la peau 14 comprennent des moyens de fixation respectifs l'un à l'autre formés par des lumières 40 ménagées dans le dispositif 12 et des languettes 42 ménagées sur la peau 14 de manière à former des moyens d'encliquetage. D'autres moyens de fixation peuvent être envisagés.

Le cadre 24 comprend deux pattes 44 venues de matière avec le cadre, formant portée d'appui contre la traverse supérieure et moyens de liaison avec celle-ci et comprenant chacune une extrémité liée au montant horizontal supérieur 30 et une extrémité libre fixée à une surface supérieure de la traverse supérieure 22. Comme représenté en détail sur la figure 3, les pattes comprennent une zone de fragilité 46 destinée à céder en cas de choc sur le montant 30 dans une direction Z, notamment en cas de choc avec la tête d'un piéton. La zone de fragilité 46 est formée par une zone de striction, une rainure, une diminution locale d'épaisseur ou une amorce de rupture.

Le montant horizontal supérieur 30, le montant horizontal inférieur 32, les deux parois latérales 26 de guidage d'air et la paroi inférieure 28 de guidage d'air comprennent une arête 48 épousant sensiblement la peau 14 autour de l'entrée d'air 16 de manière à former une portée d'appui contre la peau.

La paroi inférieure 28 de guidage d'air comprend une surface sensiblement horizontale 50 formant portée d'appui contre une surface supérieure 52 de la poutre 18, et une surface sensiblement verticale 54 formant portée d'appui contre une surface frontale 56 de la poutre 18. L'ensemble des deux surfaces 50 et 54 forme un siège d'appui sur la poutre 18. Ainsi, en cas de choc avec la hanche d'un piéton au niveau du bas de l'entrée d'air, selon une direction faisant un angle de l'ordre de 30 degrés avec la direction Z, le dispositif 12 reprend rigidement les efforts par l'intermédiaire de la poutre 18.

La paroi inférieure 28 de guidage d'air comprend également une paroi 58 d'entretoisement horizontal de la peau 14 et de la poutre 18, la paroi d'entretoisement 58 étant en appui respectivement contre une face interne de la peau 14 et contre la surface frontale 56 de la poutre 18. La paroi 58 peut être aussi bien venue de matière avec le cadre 24 que rapporté sur celui-ci, par exemple par surmoulage. Cette paroi 58 est conformée pour se déformer ou céder en cas de choc. Sur l'exemple représenté, la paroi 58 a une forme de profil en ligne brisée dont les ruptures de pentes sont destinées à constituer des zones de faiblesse pour guider sa rupture en cas de choc frontal d'un piéton contre la peau, c'est-à-dire en cas de choc selon la direction X.

On notera que dans le dispositif 12 de l'exemple décrit est adapté pour traiter trois types de chocs, c'est-à-dire les chocs tête, hanche et jambe. On reste dans le cadre de l'invention si l'on conçoit un dispositif 12 conforme à l'invention et destiné à ne traiter que l'un ou deux quelconques de ces chocs.

## Revendications

1. Dispositif (12) destiné à être monté à l'avant d'un véhicule automobile entre un radiateur (20) et une peau (14) de pare-chocs (10) munie d'une entrée d'air (16), le dispositif comprenant :
- des moyens de fixation d'au moins un volet mobile (38) d'obturation de l'entrée d'air (16),
- une surface (50) formant portée d'appui contre une poutre de chocs (18), conformée pour prendre appui contre une surface supérieure (52) de la poutre (18) et ainsi former un appui rigide en cas de choc avec une hanche d'un piéton,
- une surface (54) formant portée d'appui contre la poutre (18), conformée pour prendre appui contre une surface frontale (56) de la poutre (18) et ainsi former un appui rigide en cas de choc avec une hanche d'un piéton,
- au moins une portée d'appui (48) contre la peau (14),
le dispositif (12) étant agencé pour que, lors d'un choc d'une tête ou d'une hanche ou d'un genou d'un piéton contre le pare-chocs (10) :
- le dispositif absorbe une partie significative de l'énergie du choc en se déformant et/ou en se cassant,
- les surfaces (50; 54) formant portées d'appui contre la poutre de chocs (18) permettant au dispositif de reprendre la composante verticale et la composante horizontale d'un choc d'une hanche de piéton,
l'entrée d'air étant une entrée d'air supérieure, située au dessus de la poutre de chocs, l'entrée d'air étant en outre située au-dessus d'une hauteur correspondant sensiblement au genou d'un piéton,
le dispositif comprenant en outre une portée d'appui contre une traverse supérieure (22), par exemple une traverse de face avant technique, le dispositif (12) comprenant des moyens de liaison (44) à la traverse supérieure (22), les moyens de liaison (44) étant conformés pour céder en cas de choc sensiblement vertical, notamment en cas de choc avec la tête d'un enfant.

2. Dispositif (12) selon la revendication précédente, dans lequel la portée d'appui (48) contre la peau (14) épouse sensiblement le contour de l'entrée d'air (16).

3. Dispositif (12) selon l'une quelconque des revendications précédentes, comprenant un cadre (24) auquel est fixé le volet (38).

4. Dispositif (12) selon l'une quelconque des revendications précédentes, comprenant des moyens (58) d'entretoisement horizontal de la peau (14) et de la poutre de chocs (18), les moyens d'entretoisement (58) étant en appui respectivement contre la peau (14) et contre la poutre (18).

5. Dispositif (12) selon la revendication précédente, dans lequel les moyens d'entretoisement (58) sont conformés pour se déformer ou céder en cas de choc sensiblement horizontal et forment ainsi des moyens d'absorption d'énergie notamment en cas de choc avec la jambe d'un piéton, notamment avec son genou.

6. Dispositif (12) selon l'une quelconque des revendications précédentes, dans lequel les moyens de liaison (44) comprennent une extrémité liée au dispositif (12) et une extrémité libre destinée à être rigidement fixée à la traverse supérieure (22), notamment à une surface supérieure de la traverse, les moyens de liaison (44) comprenant au moins une zone de fragilité (46) destinée à céder en cas de choc.

7. Dispositif (12) selon l'une quelconque des revendications précédentes, dans lequel les surfaces (50, 54) d'appui contre la poutre de chocs sont situées en zone inférieure du dispositif, c'est-à-dire en dessous des moyens de fixation du volet mobile (38) d'obturation de l'entrée d'air (16).

8. Pare-chocs (10) de véhicule automobile **caractérisé en ce qu'**il comprend une peau (14) et un dispositif (12) selon l'une quelconque des revendications précédentes.

## Claims

1. Device (12) for mounting at the front of a motor vehicle between a radiator (20) and a bumper skin (14) having an air inlet (16), the device comprising:
• fastener means for fastening at least one movable flap (38) for closing the air inlet (16);
• a surface (50) forming a bearing face against an impact beam (18), the surface being shaped to bear against a top surface (52) of the beam (18) and thus form a rigid obstacle in the event of an impact with a pedestrian's hip;
• a surface (54) forming a bearing face against the beam (18), the surface being shaped to bear against a front surface (56) of the beam (18) and thus form a rigid obstacle in the event of an impact with a pedestrian's hip; and
• at least one face (48) against the skin (14);
the device (12) being arranged so that in the event of an impact of a pedestrian's head or hip or knee against the bumper (10):
• the device absorbs a significant portion of the energy of the impact by deforming and/or breaking; and
• the surfaces (50; 54) forming bearing faces against the impact beam (18) enable the device to take up the vertical component and the horizontal component of an impact against a pedestrian's hip;
the air inlet being an upper air inlet situated above the impact beam, the air inlet also being situated above a height corresponding substantially to a pedestrian's knee; and
the device further comprising a bearing face against an upper cross-member (22), e.g. a front panel cross-member, the device (12) including connection means (44) connecting with the upper cross-member (22), the connection means (44) being shaped to yield in the event of an impact that is substantially vertical, in particular in the event of an impact against a child's head.

2. Device (12) according to the preceding claim, wherein the bearing face (48) against the skin (14) fits substantially closely to the outline of the air inlet (16).

3. Device (12) according to any preceding claim, including a frame (24) to which the flap (38) is fastened.

4. Device (12) according to any preceding claim, the device including spacer means (58) for spacing the skin (14) and the impact beam (18) apart horizontally, the spacer means (58) bearing respectively against the skin (14) and against the beam (18).

5. Device (12) according to the preceding claim, wherein the spacer means (58) are shaped to deform or to yield in the event of a substantially horizontal impact, thereby forming means for absorbing energy, in particular in the event of an impact with a pedestrian's leg, in particular with the pedestrian's knee.

6. Device (12) according to any preceding claim, wherein the connection means (44) have one end connected to the device (12) and a free end designed to be fastened rigidly to the upper cross-member (22), in particular to a top surface of the cross-member, the connection means (44) including at least one zone of weakness (46) designed to yield in the event of an impact.

7. Device (12) according to any preceding claim, wherein the bearing surfaces (50, 54) against the impact beam are situated in a lower zone of the device, i.e. below the means for fastening the movable flap (38) for closing the air inlet (16).

8. Motor vehicle bumper (10) **characterized in that** it comprises a skin (14) and a device (12) according to any preceding claim.

## Patentansprüche

1. Vorrichtung (12), die dazu bestimmt ist, an der Vorderseite eines Kraftfahrzeugs zwischen einem Kühler (20) und einer Haut (14) eines Stoßfängers (10), die mit einem Lufteintritt (16) versehen ist, installiert zu werden, wobei die Vorrichtung Folgendes aufweist:
- Mittel zum Befestigen mindestens einer beweglichen Klappe (38) zum Verschließen des Lufteintritts (16),
- eine Fläche (50), die eine Stützauflage gegen einen Stoßbalken (18) bildet, die ausgebildet ist, um an einer oberen Fläche (52) des Balkens (18) anzuliegen und daher eine starre Auflage für den Fall eines Aufpralls einer Hüfte eines Fußgängers zu bilden,
- eine Fläche (54), die eine Stützauflage gegen den Balken (18) bildet, die ausgebildet ist, um an einer Vorderseitenfläche (56) des Balkens (18) anzuliegen und daher eine starre Auflage für den Fall eines Aufpralls einer Hüfte eines Fußgängers zu bilden,
- mindestens eine Stützauflage (48) gegen die Haut (14),
wobei die Vorrichtung (12) derart eingerichtet ist, dass bei einem Aufprall eines Kopfes oder einer Hüfte oder eines Knies eines Fußgängers gegen den Stoßfänger (10) :
- die Vorrichtung einen signifikanten Teil der Energie des Aufpralls absorbiert, indem sie sich verformt und/oder bricht,
- die Flächen (50; 54), die Stützauflagen gegen den Stoßbalken (18) bilden, es der Vorrichtung erlauben, die vertikale Komponente und die horizontale Komponente eines Aufpralls einer Fußgängerhüfte aufzunehmen,
wobei der Lufteintritt ein oberer Lufteintritt ist, der oberhalb des Stoßbalkens liegt, wobei der Lufteintritt ferner oberhalb einer Höhe liegt, die im Wesentlichen dem Knie eines Fußgängers entspricht, wobei die Vorrichtung ferner eine Stützauflage gegen einen oberen Querträger (22), zum Beispiel einen technischen Vorderseitenquerträger, bildet, wobei die Vorrichtung (12) Mittel (44) zum Verbinden mit dem oberen Querträger (22) aufweist, wobei die Verbindungsmittel (44) ausgebildet sind, um in dem Fall eines im Wesentlichen vertikalen Aufpralls nachzugeben, insbesondere in dem Fall eines Aufpralls des Kopfs eines Kinds.

2. Vorrichtung (12) nach dem vorhergehenden Anspruch, bei der sich die Stützauflage (48) gegen die Haut (14) im Wesentlichen an die Kontur des Lufteintritts (16) schmiegt.

3. Vorrichtung (12) nach einem der vorhergehenden Ansprüche, die einen Rahmen (24) aufweist, an dem die Klappe (38) befestigt ist.

4. Vorrichtung (12) nach einem der vorhergehenden Ansprüche, die Mittel (58) zum horizontalen Beabstanden der Haut (14) und des Stoßbalkens (18) aufweist, wobei die Beabstandungsmittel (58) jeweils gegen die Haut (14) und gegen die Balken (18) anliegen.

5. Vorrichtung (12) nach dem vorhergehenden Anspruch, bei der die Beabstandungsmittel (58) ausgebildet sind, um sich in dem Fall eines im Wesentlichen horizontalen Aufpralls zu verformen oder nachzugeben und daher Energieabsorptionsmittel bilden, insbesondere in dem Fall eines Aufpralls des Beins eines Fußgängers, insbesondere seines Knies.

6. Vorrichtung (12) nach einem der vorhergehenden Ansprüche, bei der die Verbindungsmittel (44) ein Ende aufweisen, das mit der Vorrichtung (12) verbunden ist, und ein freies Ende, das dazu bestimmt ist, starr an dem oberen Querträger (22) befestigt zu werden, insbesondere an einer oberen Fläche des Querträgers, wobei die Verbindungsmittel (44) mindestens einen zerbrechlichen Bereich (46) aufweisen, der dazu bestimmt ist, in dem Fall eines Aufpralls nachzugeben.

7. Vorrichtung (12) nach einem der vorhergehenden Ansprüche, bei der die Flächen (50, 54) zum Anliegen gegen den Stoßbalken im unteren Bereich der Vorrichtung liegen, das heißt unterhalb der Befestigungsmittel der beweglichen Verschlussklappe (38) des Lufteintritts (16).

8. Stoßfänger (10) für Kraftfahrzeug, **dadurch gekennzeichnet, dass** er eine Haut (14) und eine Vorrichtung (12) nach einem der vorhergehenden Ansprüche aufweist.
